# EUROPÄISCHE PATENTSCHRIFT

(11) **EP 1 108 875 B1**
(45) Veröffentlichungstag und Bekanntmachung des Hinweises auf die Patenterteilung: **05.03.2003**
(21) Anmeldenummer: 00125292.3
(22) Anmeldetag: 27.11.2000
(51) Int. Cl.: F02D 41/36, F01N 3/20, F02D 41/02

(54) **Verfahren zum Aufheizen eines Katalysators insbesondere im Leerlaufbetrieb eines magerlauffähigen Verbrennungsmotors eines Fahrzeugs**
Method for heating a catalyst of a lean burn internal combustion engine especially at idle
Procédé de chauffage d'un catalyseur pour un moteur a combustion interne fonctionnant avec un mélange pauvre en particulier au ralenti

(30) Priorität: 10.12.1999 DE 19959610
(43) Veröffentlichungstag der Anmeldung: 20.06.2001
(73) Patentinhaber: Volkswagen Aktiengesellschaft, 38436 Wolfsburg (DE)
(72) Erfinder: Pott, Ekkehard, 38518 Gifhorn (DE); Hahn, Hermann, 38165 Lehre (DE); Lang, Axel, 38302 Wolfenbüttel (DE)

(56) Entgegenhaltungen:
- EP-A- 0 725 211
- EP-A- 0 890 716
- US-A- 3 813 877
- US-A- 4 134 261
- US-A- 5 845 492

## Beschreibung

Die Erfindung betrifft ein Verfahren zum Betreiben eines magerlauffähigen Verbrennungsmotors eines Fahrzeugs, entsprechend dem Oberbegriff des Anspruchs 1.

Magerlauffähige Verbrennungsmotoren sind insbesondere als direkteinspritzende Otto-Motoren bekannt. Derartige Brennkraftmaschinen weisen aufgrund ihrer verhältnismäßig hohen Gemischabmagerung einen besonders niedrigen Leerlaufkraftstoffverbrauch auf. Aufgrund dieses niedrigen Leerlaufkraftstoffverbrauchs sinken die Abgastemperaturen, so daß bei langen Fahrzeugstillstandszeiten mit durchlaufendem Verbrennungsmotor der Katalysator soweit auskühlen kann, daß seine Betriebstemperatur unter eine sogenannte Anspringtemperatur sinkt. Unter Anspringtemperatur wird die Betriebstemperatur eines Katalysators verstanden, ab welcher eine korrekte Abgasbehandlung durch den Katalysator erfolgen kann. Die Anspringtemperatur stellt somit eine untere, vorteilhafterweise nicht zu unterschreitende Temperaturgrenze eines definierten Temperaturfensters des Katalysators dar.

Aus der EP 0 890 716 A2 ist ein verfahren zum Betrieb eines Verbrennungsmotors mit Überwachung der Katalysatoraktivität bekannt. Hierbei wird während des Motorbetriebs die ABgastemperatur in Strömungsrichtung hinter wenigstens enem Katalysatorelement der Abgasbehandlungsanordnung gemessen und mit einem vorbestimmten Schwellwert verglichen, der oberhalb der Aktivitätsgrenztemperatur des Katalysatorelementes liegt. Liegt die gemessene Temperatur unter diesem Schwellwert, so werden Maßnahmen zum Erhöhen der Abgastemperatur getroffen, wie beispielsweise eine Zündungsspätverstellung, eine Erhöhung der Leerlaufdrehzahl oder ein Unterdrücken eines Magerbetriebs. Dieses Verfahren hat jedoch den Nachteil, daß es einer Abkühlung des Katalysators immer hinterher hinkt und ggf. eine kurzzeitiges Absenken der Katalysatortemperatur unter die Aktivitätsgrenztemperatur nicht verhindern kann.

Der Erfindung liegt die Aufgabe zugrunde, ein gattungsgemäßes Verfahren vorzuschlagen, mittels welchem in möglichst energiesparender und zuverlässiger Weise die Betriebstemperatur des Katalysators im Leerlaufbetrieb während einer Magerphase des Verbrennungsmotors oberhalb einer unteren Temperaturgrenze gehalten wird.

Diese Aufgabe wird erfindungsgemäß durch ein Verfahren mit den Merkmalen des Anspruchs 1 gelöst. Das Verfahren ist durch folgende Schritte gekennzeichnet:
(a) Ermitteln einer Abkühlkennlinie in Bezug auf eine Auskühlung des Katalysators bei einer Magerphase des Verbrennungsmotors;
(b) Festlegen einer unteren Temperaturgrenze hinsichtlich der Betriebstemperatur des Katalysators;
(c) Bestimmen einer Mindestaufheiztemperatur des Katalysators, ab welcher die während einer Auskühlung in einem vorbestimmten Zeitintervall abnehmende Betriebstemperatur des Katalysators nach Abschluss der Auskühlung oberhalb der unteren Temperaturgrenze liegt; und
(d) Aufheizen des Katalysators auf die Mindestaufheiztemperatur jeweils vor den Magerphasen des Verbrennungsmotors im Leerlaufbetrieb.

Dieses Verfahren gewährleistet in verhältnismäßig einfacher und besonders zuverlässiger Weise, daß der Katalysator im Leerlaufbetrieb während einer Magerphase des Verbrennungsmotors nicht unter eine untere Temperaturgrenze auskühlen kann. Durch die Ermittlung einer Abkühlkennlinie in Bezug auf die Auskühlung des Katalysators während einer ersten Magerphase des Verhrennungsmotors im Leerlaufbetrieb ist es möglich, die jeweils notwendige Mindestaufheiztemperatur des Katalysators unter Berücksichtigung der maximal zulässigen Auskühlung des Katalysators während einer nachfolgenden Magerphase des Verbrennungsmotors exakt zu bestimmen. Eine derartige Abkühlkennlinie kann kontinuierlich während einer Magerphase des Verbrennungsmotors gemessen werden beziehungsweise aus bereits vorhandenen Diagrammen oder Tabellen entnommen werden. Dabei handelt es sich bei der Abkühlkennlinie vorzugsweise um eine von der Betriebszeit abhängige Temperaturkennlinie des Katalysators. Unter Ausnutzung der entsprechenden Abkühldaten (Katalysatortemperatur, Betriebszeit) ist es in verhältnismäßig einfacher und präziser Weise möglich, die Mindestaufheiztemperatur des Katalysators zu berechnen. Das Aufheizen des Katalysators auf die Mindestaufheiztemperatur erfolgt jeweils vor den Magerphasen des Verbrennungsmotors im Leerlaufbetrieb, so daß die während der jeweiligen Magerphasen einstellende Auskühlung des Katalysators im Leerlaufbetrieb innerhalb eines festgelegten Temperaturfensters liegt, das durch die Mindestaufheiztemperatur und die untere Temperaturgrenze definiert ist.

Vorzugsweise erfolgt das Aufheizen des Katalysators jeweils nach Ablauf des vorbestimmten Zeitintervalls periodisch. Hierdurch kann der Katalysator auf eine möglichst niedrige Mindestaufheiztemperatur vorzugsweise vor den jeweils sich einstellenden Magerphasen des Verbrennungsmotors erwärmt werden wodurch der zum Aufheizen des Katalysators notwendige, zuzuführende Wärmestrom zur Energieeinsparung auf einem möglichst niedrigen Niveau gehalten wird.

In einer bevorzugten Weiterbildung der Erfindung wird in periodischen Zeitabständen eine NOx-Regeneration eines Katalysators des Verbrennungsmotrs durchgeführt, wobei das vorbestimmte Zeitintervall der Periode der NOx-Regeneration des Katalysators entspricht und das Aufheizen des Katalysators während und/oder unmittelbar nach der NOx-Regeneration des Katalysators erfolgt. Da während des Betriebs des Katalysators notwendigerweise eine periodische NOx-Regeneration am Ende einer jeweiligen Magerphase des Verbrennungsmotors stattfindet, ist es besonders vorteilhaft, ein ebenfalls periodisches Aufheizen des Katalysators unmittelbar nach der jeweiligen NOx-Regeneration einzuleiten, so daß die Katalysatortemperatur nicht nur innerhalb eines bestimmten Temperaturfensters liegt, sondern auch die NOx-Regeneration jeweils bei einer bestimmten Betriebstemperatur des Katalysators oberhalb der festgelegten unteren Temperaturgrenze stattfindet.

Gemäß einer bevorzugten Ausführungsvariante ist die untere Temperaturgrenze die Anspringtemperatur des Katalysators. Die Anspringtemperatur des Katalysators bietet sich besonders zur Definition der unteren Temperaturgrenze an, da sie die Mindestbetriebstemperatur ist, ab welcher eine korrekte und effektive Abgasbehandlung durch den Katalysator möglich ist.

Vorzugsweise wird vor dem Aufheizen des Katalysators die notwendige Wärmezufuhr zu dessen Erwärmung auf die Mindestaufheiztemperatur bestimmt. Durch die Bestimmung beziehungsweise Berechnung der notwendigen Wärmezufuhr in den Katalysator zum Erreichen der Mindestaufheiztemperatur kann auf eine verhältnismäßig aufwendige Regelungseinheit zur Regelung der Katalysatortemperatur gegebenenfalls verzichtet werden. Dabei ist eine Berechnung der notwendigen Wärmezufuhr in verhältnismäßig einfacher Weise möglich.

Gemäß einer ersten Ausführungsvariante ist als Aufheizmaßnahme ein Umschalten des Verbrennungsmotors auf einen Betrieb mit stöchiometrischer Verbrennung vorgesehen. Durch Umschalten auf eine stöchiometrische Verbrennung im Leerlaufbetrieb des Verbrennungsmotors wird ein erhöhter Kraftstoffverbrauch zur Aufheizung des Katalysators auf die Mindestaufheiztemperatur ausgenutzt. Dabei kann die stöchiometrische Verbrennung gegebenenfalls mit Spätzündung erfolgen.

Ferner sind gemäß weiteren alternativen Ausführungsvarianten die folgenden Aufheizmaßnahmen möglich:
- Magerbetrieb des Verbrennungsmotors mit Nacheinspritzung bei einer stöchiometrischen oder überstöchiometrischen Verbrennung;
- Anhebung der Leerlaufdrehzahl;
- Umschaltung von einem geschichtet-mageren auf einen homogen-mageren Betriebsmodus des Verbrennungsmotors;
- Erhöhung der Schadstoffemission mittels Verlagerung des Einspritzzeitpunktes bei einem geschichtet-mageren Betriebsmodus des Verbrennungsmotors unter Ausnutzung einer chemischen Energieumsetzung im Katalysator als Aufheizenergie für den Katalysator;
- Änderung der Abgasrückführrate;
- Verlagerung des Zündzeitpunktes;
- Doppeleinspritzung;
- Überdurchschnittliche Absenkung der Motorleerlaufdrehzahl nach einer bestimmten Zeitperiode, insbesondere bei sehr niedriger Geschwindigkeit des Fahrzeugs.

Anhand eines Ausführungsbeispiels wird die Erfindung näher erläutert.

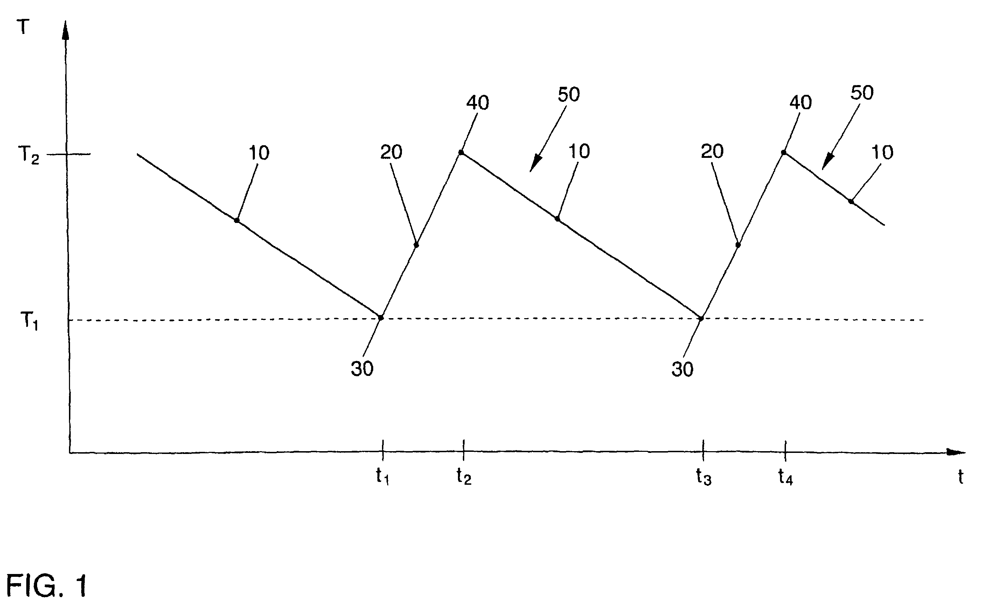

Die einzige Figur zeigt ein Temperatur-Zeit-Diagramm, in welchem in Form einer Kennlinie ein bevorzugter zeitabhängiger Temperaturänderungsverlauf des Katalysators im Leerlaufbetrieb eines magerlaufenden Verbrennungsmotors eines Fahrzeugs dargestellt ist. Die Kennlinie ist durch periodisch sich wiederholende Betriebstemperaturphasen 50 gekennzeichnet. Jede in der Figur dargestellte Betriebstemperaturphase 50 weist eine mit zunehmender Betriebszeit t ansteigende Aufheizlinie 20 und eine sich unmittelbar daran anschließende, mit steigender Betriebszeit t abfallende Auskühllinie 10 auf. Die periodische Kennlinie alterniert innerhalb eines bestimmten Temperaturfensters, das durch eine untere Grenztemperatur T₁ und eine obere Grenztemperatur T₂ definiert ist. Vorzugsweise handelt es sich bei der unteren Grenztemperatur T₁ um die Anspringtemperatur des Katalysators und bei der oberen Grenztemperatur T₂ um die Mindestaufheiztemperatur, auf welche der Katalysator gemäß der Aufheizlinie 20 zu erwärmen ist. Die mit 30 gekennzeichneten, zeitabhängigen Temperaturbetriebspunkte der Kennlinie stellen als untere Grenze des Temperaturfensters des Katalysators einen Übergangsbereich zwischen Auskühlung (Auskühllinie 10) und Aufheizung (Aufheizlinie 20) des Katalysators dar. In diesem Übergangsbereich (Temperaturbetriebspunkt 30) erfolgt eine sich periodisch wiederholende NOx-Regeneration des Katalysators. Der im Magerbetrieb auskühlende Katalysator wird somit bei Erreichen einer Anspringtemperatur (Grenztemperatur T₁) einer NOx-Regeneration unterzogen und unmittelbar daran anschließend gemäß der Aufheizlinie 20 beispielsweise im Zeitintervall t₁ bis t₂ auf die Mindestaufheiztemperatur (Temperaturbetriebspunkt 40 auf dem Niveau der oberen Grenztemperatur T₂) erwärmt, ab welcher gewährleistet ist, daß bei der sich unmittelbar anschließenden Auskühlung des Katalysators entsprechend der Auskühllinie 10 im Zeitintervall t₂ bis t₃ die Katalysatorbetriebstemperatur T nicht unterhalb die Anspringtemperatur (untere Grenztemperatur T₁) fällt. Nach einer weiteren, periodisch auftretenden NOx-Regeneration des Katalysators im Punkt 30 bei der Anspringtemperatur zum Betriebszeitpunkt t₃ folgt eine entsprechende Aufheizphase gemäß der Aufheizlinie 20 im Zeitintervall t₃ bis t₄, um den Katalysator von der Anspringtemperatur (untere Temperaturgrenze T₁ zum Betriebszeitpunkt t₃) auf die Mindestaufheiztemperatur (obere Temperaturgrenze T₂ zum Betriebszeitpunkt t₄) zu erwärmen.

Als Aufheizmaßnahmen zur Erwärmung des Katalysators von der Anspringtemperatur bis zur Mindestaufheiztemperatur im Leerlaufbetrieb eines magerlauffähigen Verbrennungsmotors eines Fahrzeugs können folgende Ausführungsvarianten vorgesehen werden:
- Umschalten des Verbrennungsmotors auf einen Betrieb mit stöchiometrischer Verbrennung gegebenenfalls mit Spätzündung;
- Magerbetrieb des Verbrennungsmotors mit Nacheinspritzung bei einer stöchiometrischen oder überstöchiometrischen Verbrennung;
- Leerlaufdrehzahlanhebung;
- Umschaltung des Verbrennungsmotors von einem geschichtet-mageren auf einen homogen-mageren Betriebsmodus;
- Erhöhung der Schadstoffemission bei einem geschichtet-mageren Betriebsmodus des Verbrennungsmotors unter Ausnutzung einer chemischen Energieumsetzung im Katalysator als Aufheizenergie für den Katalysator;
- Verlagerung des Einspritzzeitpunktes zur Erhöhung der Schadstoffemission;
- Änderung der Abgasrückführrate;
- Verlagerung des Zündzeitpunktes;
- Doppeleinspritzung;
- Überdurchschnittliche Absenkung der Motorleerlaufdrehzahl nach einer bestimmten Zeitperiode, insbesondere bei sehr niedriger Geschwindigkeit des Fahrzeugs.

Mittels einer oder mehrerer der obengenannten Aufheizmaßnahmen kann in effektiver und zuverlässiger Weise unter möglichst niedrigem Kraftstoffverbrauch gewährleistet werden, daß durch ein Aufheizen des Katalysators unmittelbar nach der periodisch erfolgenden NOx-Regeneration auf eine definierte Mindestaufheiztemperatur die Betriebstemperatur des Katalysators im Leerlaufbetrieb eines magerlaufenden Verbrennungsmotors innerhalb eines bestimmten Temperaturfensters liegt und nicht durch Auskühlen unter die Anspringtemperatur (untere Grenze des Temperaturfensters) fällt.

Beispielsweise ist es möglich, nach 10 Minuten dauerndem Fahrzeugbetrieb im Leerlauf oder Fahrt im ersten Gang die Leerlaufdrehzahl um 20 % abzusenken, um die Katalysatorauskühlung zur verhindern oder wenigstens zu verzögern. Wird darüber hinaus, das heißt parallel zur Leerlaufdrehzahlabsenkung, noch eine der anderen, vorstehend erwähnten Aufheizmaßnahmen ergriffen, wird die Katalysatorbetriebstemperatur T auf einem hinreichend hohen Niveau gehalten, das heißt innerhalb des bevorzugten Temperaturfensters, wobei gleichzeitig der Kraftstoffverbrauch vorteilhafterweise auch weiterhin verhältnismäßig niedrig bleibt.

## Patentansprüche

1. Verfahren zum Betreiben eines magerlauffähigen Verbrennungsmotors eines Fahrzeugs im Leerlaufbetrieb, **gekennzeichnet durch** folgende Schritte:
(a) Ermitteln einer Abkühlkennlinie in Bezug auf eine Auskühlung des Katalysators bei einer Magerphase des Verbrennungsmotors;
(b) Festlegen einer unteren Temperaturgrenze hinsichtlich der Betriebstemperatur des Katalysators;
(c) Bestimmen einer Mindestaufheiztemperatur des Katalysators, ab welcher die während einer Auskühlung in einem vorbestimmten Zeitintervall abnehmende Betriebstemperatur des Katalysators nach Abschluss der Auskühlung oberhalb der unteren Temperaturgrenze liegt; und
(d) Aufheizen des Katalysators auf die Mindestaufheiztemperatur jeweils vor den Magerphasen des Verbrennungsmotors im Leerlaufbetrieb.

2. Verfahren nach Anspruch 1, **dadurch gekennzeichnet, daß** das Aufheizen des Katalysators jeweils nach Ablauf des vorbestimmten Zeitintervalls periodisch erfolgt.

3. Verfahren nach einem der vorhergehenden Ansprüche, **dadurch gekennzeichnet, daß** in periodischen Zeitabständen eine NOx-Regeneration eines Katalysators des Verbrennungsmotrs durchgeführt wird, wobei das vorbestimmte Zeitintervall der Periode der NOx-Regeneration des Katalysators entspricht und das Aufheizen des Katalysators während und/oder unmittelbar nach der NOx-Regeneration des Katalysators erfolgt.

4. Verfahren nach einem der vorhergehenden Ansprüche, **dadurch gekennzeichnet, daß** die untere Temperaturgrenze die Anspringtemperatur des Katalysators ist.

5. Verfahren nach einem der vorhergehenden Ansprüche, **dadurch gekennzeichnet, daß** vor dem Aufheizen des Katalysators die notwendige Wärmezufuhr zu dessen Erwärmung auf die Mindestaufheiztemperatur bestimmt wird.

6. Verfahren nach einem der vorhergehenden Ansprüche, **dadurch gekennzeichnet, daß** als Aufheizmaßnahme ein Umschalten des Verbrennungsmotors auf einen Betrieb mit stöchiometrischer Verbrennung vorgesehen ist.

7. Verfahren nach Anspruch 6, **dadurch gekennzeichnet, daß** die stöchiometrische Verbrennung mit Spätzündung erfolgt.

8. Verfahren nach einem der vorhergehenden Ansprüche, **dadurch gekennzeichnet, daß** als Aufheizmaßnahme ein Magerbetrieb des Verbrennungsmotors mit Nacheinspritzung bei einer stöchiometrischen oder überstöchiometrischen Verbrennung vorgesehen ist.

9. Verfahren nach einem der vorhergehenden Ansprüche, **dadurch gekennzeichnet, daß** als Aufheizmaßnahme eine Leerlaufdrehzahlanhebung vorgesehen ist.

10. Verfahren nach einem der vorhergehenden Ansprüche, **dadurch gekennzeichnet, daß** der Verbrennungsmotor auf einen geschichtet-mageren und einen homogen-mageren Betriebsmodus einstellbar ist, wobei als Aufheizmaßnahme von dem geschichtet-mageren auf den homogen-mageren Betriebsmodus umgeschaltet wird.

11. Verfahren nach einem der vorhergehenden Ansprüche, **dadurch gekennzeichnet, daß** als Aufheizmaßnahme eine Erhöhung der Schadstoffemission mittels Verlagerung des Einspritzzeitpunktes bei einem geschichtet-mageren Betriebsmodus des Verbrennungsmotors unter Ausnutzung einer chemischen Energieumsetzung im Katalysator als Aufheizenergie für den Katalysator durchgeführt wird.

12. Verfahren nach einem der vorhergehenden Ansprüche, **dadurch gekennzeichnet, daß** der Verbrennungsmotor eine Abgasrückführung aufweist, wobei als Aufheizmaßnahme eine Änderung der Abgasrückführrate durchgeführt wird.

13. Verfahren nach einem der vorhergehenden Ansprüche, **dadurch gekennzeichnet, daß** als Aufheizmaßnahme eine Verlagerung des Zündzeitpunktes vorgesehen ist.

14. Verfahren nach einem der vorhergehenden Ansprüche, **dadurch gekennzeichnet, daß** als Aufheizmaßnahme eine Doppeleinspritzung vorgesehen ist.

15. Verfahren nach einem der vorhergehenden Ansprüche, **dadurch gekennzeichnet, daß** zur Verringerung der Katalysatorauskühlung die Motorleerlaufdrehzahl nach einer bestimmten Zeitperiode, insbesondere bei sehr niedriger Geschwindigkeit des Fahrzeugs, überdurchschnittlich abgesenkt wird.

## Claims

1. Method for operating at idle a vehicle internal combustion engine capable of operating on a lean mixture, **characterized by** the following steps:
(a) determination of a cooling characteristic in relation to cooling of the catalyst during a lean-burn phase of the internal combustion engine;
(b) definition of a lower temperature limit with respect to the operating temperature of the catalyst;
(c) determination of a minimum heating temperature of the catalyst, above which the operating temperature of the catalyst, which decreases during a cooling process in a predetermined time, will be above the lower temperature limit on completion of the cooling process; and
(d) heating of the catalyst to the minimum heating temperature in each case before the lean-burn phases of the internal combustion engine in idling mode.

2. Method according to Claim 1, **characterized in that** the heating of the catalyst takes place periodically in each case after the expiry of the predetermined time.

3. Method according to one the preceding claims, **characterized in that** NOx regeneration of a catalyst of the internal combustion engine is carried out at periodic time intervals, the predetermined time corresponding to the period of the NOx regeneration of the catalyst, and the heating of the catalyst taking place during and/or immediately after the NOx regeneration of the catalyst.

4. Method according to one of the preceding claims, **characterized in that** the lower temperature limit is the light-off temperature of the catalyst.

5. Method according to one of the preceding claims, **characterized in that** the necessary heat input to heat the catalyst to the minimum heating temperature is determined before the catalyst is heated.

6. Method according to one of the preceding claims, **characterized in that** switching over the internal combustion engine to operation with stoichiometric combustion is provided as a heating measure.

7. Method according to Claim 6, **characterized in that** stoichiometric combustion is performed with retarded ignition.

8. Method according to one of the preceding claims, **characterized in that** lean-burn operation of the internal combustion engine with post-injection and stoichiometric or superstoichiometric combustion is provided as a heating measure.

9. Method according to one of the preceding claims, **characterized in that** an increase in the idling speed is provided as a heating measure.

10. Method according to one of the preceding claims, **characterized in that** the internal combustion engine can be set to a stratified lean-burn and a homogeneous lean-burn operating mode, the engine being switched over from the stratified lean-burn to the homogeneous lean-burn operating mode as a heating measure.

11. Method according to one of the preceding claims, **characterized in that** an increase in pollutant emissions by shifting the injection point in a stratified lean-burn operating mode of the internal combustion engine while exploiting chemical energy conversion in the catalyst as heating energy for the catalyst is carried out as a heating measure.

12. Method according to one of the preceding claims, **characterized in that** the internal combustion engine has exhaust-gas recirculation, a change in the exhaust-gas recirculation rate being carried out as a heating measure.

13. Method according to one of the preceding claims, **characterized in that** a shift in the ignition point is provided as a heating measure.

14. Method according to one of the preceding claims, **characterized in that** double injection is provided as a heating measure.

15. Method according to one of the preceding claims, **characterized in that**, to reduce the cooling of the catalyst, the engine idling speed is lowered by an above-average amount after a certain time period, especially when the vehicle is travelling at a very low speed.

## Revendications

1. Procédé pour faire fonctionner un moteur à combustion interne de véhicule automobile fonctionnant avec un mélange pauvre au ralenti, **caractérisé par** les étapes suivantes :
(a) établir une caractéristique de refroidissement en fonction d'un refroidissement du catalyseur dans une phase de fonctionnement avec un mélange pauvre du moteur à combustion interne ;
(b) fixer une limite de température inférieure de la température de fonctionnement du catalyseur ;
(c) déterminer une température de chauffage minimale du catalyseur, à partir de laquelle la température de fonctionnement du catalyseur diminuant pendant un intervalle de temps prédéterminé lors d'un refroidissement du catalyseur se trouve au-dessus de la limite de température inférieure à l'issue du refroidissement ; et
(d) chauffer le catalyseur à la température de chauffage minimale à chaque fois avant les phases de fonctionnement du moteur à combustion interne avec un mélange pauvre au ralenti.

2. Procédé selon la revendication 1, **caractérisé en ce que** le chauffage du catalyseur s'effectue périodiquement à chaque fois après l'écoulement de l'intervalle de temps prédéterminé.

3. Procédé selon l'une quelconque des revendications précédentes, **caractérisé en ce que**, au cours d'intervalles de temps périodiques, on effectue une régénération NOx d'un catalyseur du moteur à combustion interne, l'intervalle de temps prédéterminé correspondant à la période de régénération NOx du catalyseur et le chauffage du catalyseur s'effectuant pendant et/ou immédiatement après la régénération NOx du catalyseur.

4. Procédé selon l'une quelconque des revendications précédentes, **caractérisé en ce que** la limite de température inférieure est la température de démarrage du catalyseur.

5. Procédé selon l'une quelconque des revendications précédentes, **caractérisé en ce qu'**avant le chauffage du catalyseur, on détermine l'apport de chaleur nécessaire pour son chauffage à la température de chauffage minimale.

6. Procédé selon l'une quelconque des revendications précédentes, **caractérisé en ce qu'**on prévoit, en tant que mesure de chauffage, une commutation du moteur à combustion interne à un fonctionnement avec une combustion stoechiométrique.

7. Procédé selon la revendication 6, **caractérisé en ce que** la combustion stoechiométrique s'effectue avec un retard à l'allumage.

8. Procédé selon l'une quelconque des revendications précédentes, **caractérisé en ce qu'**on prévoit, en tant que mesure de chauffage, un fonctionnement avec un mélange pauvre du moteur à combustion interne avec post-injection dans le cas d'une combustion stoechiométrique ou sur-stoechiométrique.

9. Procédé selon l'une quelconque des revendications précédentes, **caractérisé en ce qu'**on prévoit, en tant que mesure de chauffage, une augmentation du régime de ralenti.

10. Procédé selon l'une quelconque des revendications précédentes, **caractérisé en ce que** le moteur à combustion interne peut être ajusté à un mode de fonctionnement étagé avec mélange pauvre et homogène avec mélange pauvre, la mesure de chauffage consistant à commuter du mode de fonctionnement étagé avec mélange pauvre au mode de fonctionnement homogène avec mélange pauvre.

11. Procédé selon l'une quelconque des revendications précédentes, **caractérisé en ce qu'**en tant que mesure de chauffage, on effectue une augmentation des émissions toxiques au moyen d'un décalage de l'instant d'injection lors d'un mode de fonctionnement étagé avec mélange pauvre du moteur à combustion interne, en utilisant une conversion énergétique chimique dans le catalyseur en tant qu'énergie de chauffage pour le catalyseur.

12. Procédé selon l'une quelconque des revendications précédentes, **caractérisé en ce que** le moteur à combustion interne présente une recirculation des gaz d'échappement, la mesure de chauffage consistant à modifier la proportion de recirculation des gaz d'échappement.

13. Procédé selon l'une quelconque des revendications précédentes, **caractérisé en ce que** l'on prévoit, en tant que mesure de chauffage, un décalage de l'instant d'allumage.

14. Procédé selon l'une quelconque des revendications précédentes, **caractérisé en ce que** l'on prévoit, en tant que mesure de chauffage, une double injection.

15. Procédé selon l'une quelconque des revendications précédentes, **caractérisé en ce que** pour la réduction du refroidissement du catalyseur, le régime de ralenti du moteur est abaissé plus que d'habitude après une certaine période de temps, notamment dans le cas d'une vitesse très faible du véhicule.
